# EUROPÄISCHE PATENTSCHRIFT

(11) **EP 2 750 873 B1**
(45) Veröffentlichungstag und Bekanntmachung des Hinweises auf die Patenterteilung: **10.07.2019**
(21) Anmeldenummer: 12720497.2
(22) Anmeldetag: 11.05.2012
(51) Int. Cl.: B30B 15/02

(54) **SCHNELLKUPPLUNGSSYSTEM ZUR BEFESTIGUNG EINES WECHSELKOPFES AN EINEM PRESSWERKZEUG**
SCHNELLKUPPLUNGSSYSTEM ZUR BEFESTIGUNG EINES WECHSELKOPFES AN EINEM PRESSWERKZEUG
SYSTÈME DE COUPLAGE RAPIDE POUR LA FIXATION D'UNE TÊTE INTERCHANGEABLE SUR UN OUTIL DE PRESSAGE

(30) Priorität: 16.06.2011 CH 10062011; 16.06.2011 CH 10072011
(43) Veröffentlichungstag der Anmeldung: 09.07.2014
(73) Patentinhaber: Von Arx AG, 4450 Sissach (CH)
(72) Erfinder: SCHWEIZER, Beat, CH-4425 Titterten (CH); MORITZ, Martin, F-68440 Landser (FR)
(74) Vertreter: Schneider Feldmann AG Patent- und Markenanwälte
(86) Internationale Anmeldenummer: PCT/EP2012/058767
(87) Internationale Veröffentlichungsnummer: WO 2012/171732

(56) Entgegenhaltungen:
- DE-A1- 2 426 760
- DE-A1- 10 046 869
- DE-U1- 20 012 706
- DE-U1-202009 010 128
- FR-A1- 2 649 028
- JP-A- 3 042 199
- US-A- 2 255 333
- US-A- 3 103 367
- US-A- 3 583 715
- US-A1- 2004 161 313
- US-B1- 6 324 768
- US-B1- 6 511 268

## Beschreibung

Die Erfindung betrifft ein Schnellkupplungssystem zur Befestigung eines Wechselkopfes an einem Presswerkzeug nach Patentanspruch 1.

Pressgeräte werden zu verschiedenen Zwecken eingesetzt, so auch beispielsweise zum Verpressen von Kabelschuhen auf Elektrokabel. Weil es wegen der Vielzahl von möglichen Durchmessern für Elektrokabel auch eine Vielzahl von dazu passenden Kabelschuhen braucht, muss das für das Verpressen der Kabelschuhe einzusetzende Pressgerät auch mit einem Presskopf ausgerüstet oder ausrüstbar sein, der für die verschiedenen Grössen der einzusetzenden Kabelschuhe geeignet ist. Werden auswechselbare Pressköpfe verwendet, so werden diese vereinfacht im Folgenden einfach als Wechselköpfe bezeichnet. Mit dem gleichen Pressgerät und mit verschiedenen Wechselköpfen kann man also bei Bedarf schnell und leicht auf andere Kabelschuhgrössen umstellen. Darüber hinaus kann man mit einem Wechselkopfsystem auch leicht auf andere Werkzeug- oder Adaptersysteme umstellen, so beispielsweise auf Kabelschneid- oder Stanzwerkzeuge.

Ein besonderes Problem bei Pressgeräten mit Wechselköpfen sind jedoch die zu übertragenden Längskräfte, also die von den Pressgeräten erzeugten Druckkräfte, weil der Kupplungsmechanismus, mit dem der Wechselkopf am Pressgerät befestigt ist, diesen Kräften natürlich standhalten muss und die entsprechenden Sicherheitsanforderungen relativ hoch sind. Üblicherweise wird das Problem der Befestigung der Wechselköpfe an Pressgeräten deshalb mit Schraubverbindungen gelöst. Schraubverbindungen haben, insbesondere dann, wenn viele Gewindegänge im Eingriff sind, den Vorteil, dass sehr hohe Längskräfte sicher aufgefangen werden können und dass in solchen Fällen die Gefahr eines unbeabsichtigten Lösens im druckbeaufschlagten Zustand praktisch nicht besteht. Es scheint nämlich äusserst unwahrscheinlich, dass sich die verwendete Schraubverbindung unbemerkt durch Vibrationen gleich um mehrere Gewindegänge löst. Aus sicherheitstechnischen Gründen ist die Schraubverbindung deshalb die heute gängige technische Lösung für die Befestigung von Wechselköpfen an Pressgeräten.

Ein Beispiel einer solchen Lösung mit aufschraubbarem Wechselkopf ist in der EP-1 084 798 offenbart. Die Schrift zeigt ein hydraulisches Handpressgerät mit relativ langem aufschraubbarem Gewindeteil zur Befestigung des Wechselkopfes am Handpressgerät.

Die hohe Betriebssicherheit wird bei der EP-1 084 798 allerdings durch relativ umständliche und zeitraubende Auswechselbarkeit erkauft. Zweifellos ist es in modernen Arbeitsumgebungen ein Nachteil, wenn das Austauschen eines Wechselkopfes viel Zeit beansprucht, insbesondere dann, wenn es häufig erfolgen muss. Weil nun aber Sicherheitsaspekte berechtigterweise stets sehr hoch bewertet wurden und werden, hatte/hat man auch kaum Veranlassung, sich bei Pressgeräten mit Wechselköpfen von diesem bewährten Verbindungskonzept abzukehren. Zwar sind Schnellkupplungssysteme auch bei Pressgeräten äusserst erwünscht, selbstverständlich aber nur dann, wenn die Sicherheit im gleichen Mass gewährleistet ist.

Das Dokument US-A-2255333 offenbart ein Schnellkupplungssystem gemäß dem Oberbegriff des Anspruchs 1. Es ist deshalb Aufgabe der vorliegenden Erfindung, ein Schnellkupplungssystem zur Befestigung eines Wechselkopfes an einem Presswerkzeug anzugeben, das schnellere Auswechselbarkeit unter Beibehaltung von hoher Betriebssicherheit gewährleistet.

Diese Aufgabe wird durch die Merkmale des Patentanspruchs 1 gelöst.

Die Lösung geht von der Überlegung aus, dass das Vorhandensein eines Gewindes zur Herstellung der Verbindung zwischen Presswerkzeug und Wechselkopf nicht zwingend die einzige Möglichkeit ist, um eine genügend hohe Verbindungssicherheit zu gewährleisten. Andere Systeme, die beispielsweise einen Bajonettverschluss oder eine Sicherungsmittelanordnung mit radial verschieblichen Sicherungsmitteln verwenden, können das gleiche Mass an Verbindungssicherheit bieten. Natürlich hängt es im Einzelfall, insbesondere bei der letztgenannten Lösungsvariante, stark davon ab, wie die Sicherungsmittelanordnung ausgestaltet und dimensioniert ist. Der Hauptvorteil besteht aber darin, dass der Verzicht auf ein Gewinde zur Herstellung der Verbindung zwischen Presswerkzeug und Wechselkopf im Wesentlichen erst die Realisierung eines echten Schnellkupplungssystems ermöglicht.

Schwerpunktmässig, aber nicht ausschliesslich, befasst sich die vorliegende Erfindung mit Lösungen, bei denen radial verschiebliche Sicherungsmittel eingesetzt werden. Deshalb erhalten auch die für diesen Fall vorzusehenden Sicherheitsmassnahmen ein hohes Gewicht.

Grundsätzlich ist davon auszugehen, dass es bei Systemen mit radial verschieblichen Sicherungsmitteln eine Vielzahl von möglichen technischen Einzellösungen gibt. Alle diese Einzellösungen stützen sich aber auf das Grundprinzip, dass nur eine deutliche Vervielfachung der vorzusehenden radial verschieblichen Sicherungsmittel die erforderliche Betriebssicherheit, speziell bei hohen Drücken, bietet. Dies bedeutet gleichzeitig natürlich auch, dass alle Möglichkeiten zu falschem Zusammenbau, die sich konstruktionsbedingt möglicherweise ungewollt und unbeabsichtigt ergeben könnten, verhindert werden müssen. Falscher Zusammenbau wird im Folgenden als ein Zusammenbauzustand verstanden, bei dem nicht alle vorhandenen radial verschieblichen Sicherungsmittel in den Eingriff gelangen. Fehlerhafte Konstruktionen könnten dazu führen, dass dies dennoch möglich ist. Falsche Zusammenbauten würden natürlich sicherheitstechnisch nicht genügen und sind deshalb zu vermeiden. Das kann grundsätzlich mit konstruktiven Massnahmen oder mit Hinweisen am Gerät gelöst werden. Zu Letzterem ist natürlich zu bemerken, dass es generell vorzuziehen ist, den falschen Zusammenbau und die Möglichkeit zur Inbetriebnahme bei falschem Zusammenbau durch konstruktive Massnahmen ganz zu verhindern, denn die blosse Anzeige eines falschen Zusammenbaus könnte bei flüchtiger Arbeitsweise ungenügende Beachtung finden und dann trotzdem zu Unfällen führen.

Dennoch ist es erfindungsgemäß natürlich sinnvoll, selbst bei einem Presswerkzeug das gar nicht falsch zusammengebaut werden kann, eine Anzeige zu haben, die dem Anwender die Gewissheit gibt, dass alles richtig zusammengesetzt ist und dass die Sicherheit auch gewährleistet ist. Derartige Anzeigevorrichtungen sind sehr einfach zu realisieren und haben wahrscheinlich sogar eine nicht zu unterschätzende vertrauensbildende Wirkung.

Die Vervielfachung der vorhandenen radial verschieblichen Sicherungsmittel zur Erhöhung der Betriebssicherheit beinhaltet, dass die Sicherungsmittel mindestens doppelt vorhanden und axial hintereinander angeordnet sind. Dabei ist der Begriff Sicherungsmittel so zu verstehen, dass er beispielsweise je ein einzelnes radial verschiebliches Kugelelement oder aber auch eine (über einen Umfang verteilte) Gruppe von radial verschieblichen Kugelelementen umfassen kann. In den weiter hinten beschriebenen Ausführungsbeispielen handelt es sich um Lösungen, bei denen jeweils zwei axial hintereinander angeordnete und je über einen Umfang verteilte Gruppen von radial verschieblichen Kugelelementen vorhanden sind. Die aufzufangenden Kräfte verteilen sich somit auf mindestens zwei Sicherungsmittel bzw. stets auf eine Vielzahl von Kugelelementen. Gerade bei solchen Lösungen muss aber, wie oben erwähnt, darauf geachtet werden, dass eine mechanisch feste Kupplung zwischen dem Presswerkzeug und dem Wechselkopf in einer nicht- betriebssicheren Stellung, in der nur eine Gruppe von radial verschieblichen Kugelelementen im Eingriff steht, gar nicht möglich ist. Das ist bei den beiden gezeigten Ausführungsbeispielen der Fall.

Beide Ausführungsbeispiele sind von einer Art, dass sich in einer nicht-betriebssicheren Zusammenbaustellung gar keine mechanisch feste Kupplung bzw. Arretierung zwischen dem Presswerkzeug und dem Wechselkopf herstellen lässt. Da zudem bei Presswerkzeugen dieser Art der Pressdruckaufbau mittels eines Presskolbens nur relativ langsam erfolgt, würde der Wechselkopf selbst bei versehentlicher Inbetriebnahme einfach aus dem Halteteil am Pressgerät gedrückt und es besteht keinerlei Gefahr für das Bedienpersonal.

Der Wechselkopf eines derartigen Schnellkupplungssystems lässt sich somit konstruktiv besonders einfach gestalten. Er braucht nämlich an dem in ein Halteteil des Presswerkzeuges einführbaren Schaftteil des Wechselkopfes lediglich mindestens zwei axial hintereinander angeordnete Haltenuten, was zugleich den Vorteil der einfachen Herstellbarkeit hat. Die Haltenuten können sich vorteilhaft über den ganzen Umfang, gegebenenfalls aber auch nur über Teile des Umfangs des Schaftteils erstrecken. Sie können bei Bedarf natürlich auch einfach als passend angeordnete Einzelausnehmungen ausgeführt sein.

Schnellkupplungssysteme dieser Art lassen sich natürlich nicht nur an elektrisch, pneumatisch, mechanisch oder hydraulisch betriebenen Pressgeräten einsetzen; sie eignen sich genau so gut für handbetriebene Pressgeräte oder für Pressgeräte mit flexiblen Anschlüssen an den beweglichen Presskolben.

Wie eingangs erwähnt, sind andere Schnellkupplungsysteme, die eine Sicherungsmittelanordnung in der Form eines Bajonettverschluss-Systems umfassen, ebenfalls möglich. Bajonettverschluss-Systeme beinhalten eine durch Drehung betätigbare Einrast-Vorrichtung. Obwohl das Auffangen grösserer Kräfte bei Bajonettverschlüssen tendenziell einfacher ist, muss auch hier möglicherweise mit geeigneten Mitteln sichergestellt werden, dass ein unbeabsichtigtes und nicht vollständiges Einrasten des Bajonettverschlusses nicht zu Sicherheitsproblemen führt.

Der Begriff 'Sicherungsmittelanordnung' ist in diesem Zusammenhang breit zu verstehen. Unabhängig davon, ob ein Wechselkopf mittel eines Gewindes, eines Bajonettverschlusses oder mit Hilfe von radial verschieblichen Sicherungsmitteln an einem Presswerkzeug befestigt ist, sind darunter diejenigen Mittel zu verstehen, die die sichere Befestigung gewährleisten sollen. Bei Schraubverbindungen und weitgehend auch bei Bajonettverschlüssen geschieht dies hauptsächlich durch die Verbindungsart per se. Bei Lösungen mit radial verschieblichen Sicherungsmitteln treten natürlich noch weitere Komponenten, wie erfindungsgemäß der Arretierring 2 und die Feder 9, hinzu.

Zwei Ausführungsbeispiele der Erfindung mit radial verschieblichen Sicherungsmitteln, die die vorstehend allgemein erläuterten Erfordernisse erfüllen, werden im Folgenden anhand von Zeichnungen näher erläutert. Dabei zeigt die
- Fig. 1: ein erstes Ausführungsbeispiel eines erfindungsgemässen Schnellkupplungssystems mit eingesetztem Wechselkopf,
- Fig. 2: ein zweites Ausführungsbeispiel eines erfindungsgemässen Schnellkupplungssystems mit eingesetztem Wechselkopf,
- Fig. 3: eine Anzeigevorrichtung eines erfindungsgemäßen Schnellkupplungssystems bei einem nicht vollständig eingesetzten und nicht verriegelten Wechselkopf, und die
- Fig. 4: die Anzeigevorrichtung von Fig. 3 beim vollständig eingesetzten und verriegelten Wechselkopf.

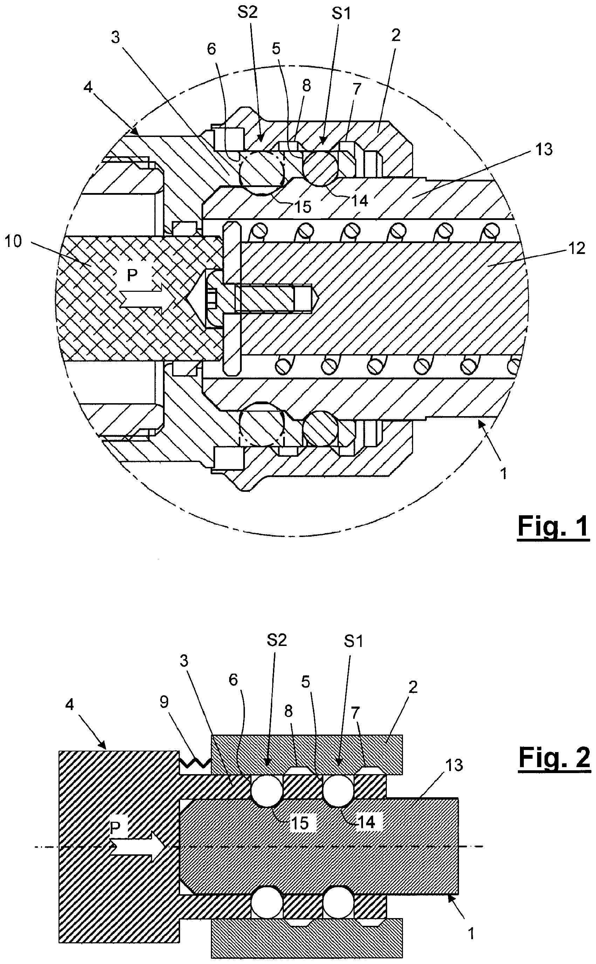

Die Figur 1 zeigt ein erstes Ausführungsbeispiel eines erfindungsgemässen Schnellkupplungssystems mit eingesetztem Wechselkopf anhand einer Schnittzeichnung.

Dabei ist ein Schaftteil 13 eines Wechselkopfes 1 vollständig in ein Sicherungsmittelhalteteil 3 an einem Presswerkzeug 4 eingeschobenen und darin arretiert. Zur Arretierung dient ein auf dem Sicherungsmittelhalteteil 3 axial verschieblicher Arretierring 2, der von einer (nicht dargestellten) Feder nach vorn (also vom Presswerkzeug weg) gedrückt wird.

Eine Sicherungsmittelanordnung beinhaltet Sicherungsmittel S1, S2 in der Form von Kugelelementen, die in Kugelführungen 5, 6 radial verschieblich im Sicherungsmittelhalteteil 3 angeordnet sind.

Die Sicherungsmittel S1, S2 sind hier als zwei Gruppen von (jeweils über einen Umfang verteilten) radial verschieblichen Kugelelementen ausgebildet. Die beiden Gruppen verwenden Kugelelemente unterschiedlicher Durchmesser.

Wie aus der Figur 1 ersichtlich, hat das Sicherungsmittelhalteteil 3 abgestufte Innenradien, nämlich einen (äusseren) Bereich mit einem grösseren Innenradius im Bereich der Kugelführungen 5, und einen (inneren) Bereich mit einem kleineren Innenradius im Bereich der Kugelführungen 6.

Befindet sich der Arretierring 2 in der gezeigten Arretierstellung, so werden die Sicherungsmittel S1, S2 in entsprechende Haltenuten 14, 15 im Schaftteil 13 des Wechselkopfes 1 gedrückt und bewirken so die sichere und zuverlässige Arretierung bzw. Verriegelung des Wechselkopfes. Ein falscher Zusammenbau ist wegen der unterschiedlichen Grössen der Kugelelemente nicht möglich, denn ein Versuch zum Zusammenbau in einer Stellung in der nur die Sicherungsmittel S1 im Eingriff sind, ergibt keine feste Verbindung zwischen Presswerkzeug und Wechselkopf.

Befindet sich der Arretierring 2 in der (nicht dargestellten) Auslösestellung, so können die Sicherungsmittel S1, S2 in die Aufnahmenuten 7, 8 ausweichen und der Wechselkopf 1 kann aus dem Sicherungsmittelhalteteil 3 herausgezogen werden.

Im Betrieb wirkt ein hydraulisch, pneumatisch, mechanisch oder elektrisch betätigter Presskolben 10 des Pressgerätes 4 mit einer Presskraft P auf eine federnd gelagerte Schubstange 12 im Innern des Wechselkopfes 1. Dabei dient die Schubstange zur Betätigung einer Presseinrichtung im Wechselkopf.

Die Figur 2 zeigt in schematischer Weise ein zweites Ausführungsbeispiel eines erfindungsgemässen Schnellkupplungssystems mit eingesetztem Wechselkopf anhand einer Schnittzeichnung.

Auch hier ist ein Schaftteil 13 eines Wechselkopfes 1 vollständig in ein Sicherungsmittelhalteteil 3 an einem Presswerkzeug 4 eingeschobenen und darin arretiert. Zur Arretierung dient ein auf dem Sicherungsmittelhalteteil 3 axial verschieblicher Arretierring 2, der von einer Feder 9 nach vorn (also vom Presswerkzeug weg) gedrückt wird.

Eine Sicherungsmittelanordnung beinhaltet Sicherungsmittel S1, S2 in der Form von Kugelelementen, die in Kugelführungen 5, 6 radial verschiebliche im Sicherungsmittelhalteteil 3 angeordnet sind.

Die Sicherungsmittel S1, S2 sind auch hier als zwei Gruppen von (jeweils über einen Umfang verteilten) radial verschieblichen Kugelelementen ausgebildet. Die beiden Gruppen verwenden in diesem Fall jedoch Kugelelemente gleicher Durchmesser.

Wie aus der Figur 2 ersichtlich, hat das Sicherungsmittelhalteteil 3 hier jedoch keine abgestuften Innenradien, sondern vielmehr einen gleichbleibenden Innenradius im ganzen Haltebereich.

Befindet sich der Arretierring 2 in der gezeigten Arretierstellung, so werden die Sicherungsmittel S1, S2 in entsprechende Haltenuten 14, 15 im Schaftteil 13 des Wechselkopfes 1 gedrückt und bewirken so die sichere und zuverlässige Arretierung bzw. Verriegelung des Wechselkopfes. Ein falscher Zusammenbau ist trotz der gleichen Grösse der Kugelelemente und trotz des gleichen Innenradius des Sicherungsmittelhalteteils nicht möglich, denn ein Versuch zum Zusammenbau in einer Stellung in der nur die Sicherungsmittel S1 im Eingriff sind, ergibt keine feste Verbindung zwischen Presswerkzeug und Wechselkopf, weil sich der Arretierring 2 in dieser Position gar nicht in die dargestellte Arretierstellung schieben lässt. Das in den Sicherungsmittelhalteteil 3 hineinragende Teil des Schaftteils 13 ist nämlich so dimensioniert bzw. verlängert, dass das Sicherungsmittel S2 nicht ausweichen und damit den Arretierring auch nicht für eine Verschiebung freigeben kann.

Befindet sich der Arretierring 2 in der (nicht dargestellten) Auslösestellung, so können die Sicherungsmittel S1, S2 in die Aufnahmenuten 7, 8 ausweichen und der Wechselkopf 1 kann aus dem Sicherungsmittelhalteteil 3 herausgezogen werden.

Im Gegensatz zum ersten Ausführungsbeispiel und zur Vereinfachung sind hier die Mittel zur Presskraftübertragung nicht dargestellt. Auch hier wirkt aber im Betrieb ein hydraulisch, pneumatisch, mechanisch oder elektrisch betätigter Presskolben (nicht dargestellt) des Pressgerätes 4 mit einer Presskraft P auf eine federnd gelagerte Schubstange (nicht dargestellt) im Innern des Wechselkopfes 1, die ihrerseits zur Betätigung einer Presseinrichtung im Wechselkopf dient.

Beide Ausführungsbeispiele zeigen also Lösungen, bei denen die Sicherungsmittelanordnung radial verschiebliche Sicherungsmittel S1, S2 aufweist, wobei die Sicherungsmittel S1, S2 zur Erhöhung der Sicherungswirkung mindestens doppelt vorhanden und axial hintereinander angeordnet sind, und zwar so, dass die Sicherungsmittelanordnung in einer nicht-betriebssicheren Stellung eine mechanisch feste Kupplung zwischen dem Presswerkzeug 4 und dem Wechselkopf 1 verunmöglicht. Somit kann mit der Vervielfachung bzw. mindestens Verdoppelung und axialen Hintereinanderschaltung der Sicherungsmittel S1, S2 die notwendige Betriebssicherheit erreicht werden und zugleich natürlich auch die primär angestrebte Schnellkupplungsmöglichkeit zwischen Presswerkzeug und Wechselkopf.

Selbstverständlich sind weitere konstruktive Lösungen für Sicherungsmittelanordnungen mit radial verschieblichen Sicherungsmitteln möglich. So ist es beispielsweise möglich, dass die Sicherungsmittel nicht kugelförmig, sondern bolzen- oder nockenartig gestaltet sind, und es ist auch möglich, dass die Sicherungsmittel mehr als doppelt vorhanden sind.

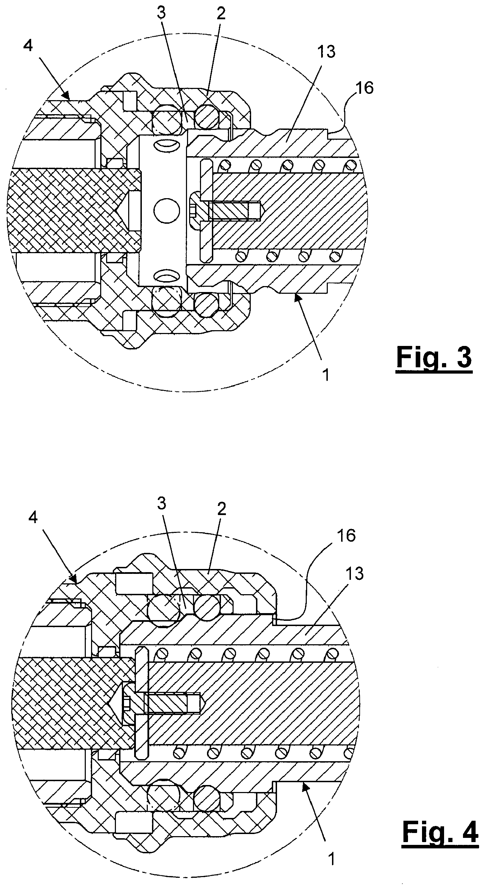

Die Figuren 3 und 4 zeigen schliesslich noch eine Realisierungsmöglichkeit für die visuelle Anzeige zum richtigen und sicheren Zusammenbau des Gerätes, also von Presswerkzeug 4 und Wechselkopf 1.

Die Figur 3 zeigt eine solche Anzeigevorrichtung bei einem nicht vollständig eingesetzten und nicht verriegelten Wechselkopf. Das hier dargestellte Schnellkupplungssystem entspricht prinzipiell demjenigen gemäss Fig. 1. Im Gegensatz zu der Darstellung gemäss Fig. 1 hat hier jedoch der Schaftteil 13 des Wechselkopfes 1 einen klar ausgeprägten und gut sichtbaren Markierungsabsatz 16. Der Markierungsabsatz 16 befindet sich deutlich ausserhalb des Sicherungsmittelhalteteils 3 und des Arretierrings 2, und zwar selbst dann, wenn der letztere maximal nach vorne geschoben ist.

Die Figur 4 zeigt die Anzeigevorrichtung von Fig. 3 beim vollständig eingesetzten und verriegelten Wechselkopf. Der Markierungsabsatz 16 befindet sich jetzt deutlich innerhalb des (in der Verriegelungsstellung) nach vorne geschobenen Arretierringes 2 und ist somit unsichtbar und auch nicht mehr ertastbar. Der Anwender kann dies als Bestätigung erkennen, dass das Gerät jetzt betriebssicher zusammengebaut ist.

Selbstverständlich gibt es neben der gezeigten konstruktiv besonders einfachen Lösung noch weitere Realisierungsmöglichkeiten für die Anzeigevorrichtung. So könnte beispielsweise eine auf dem Schaftteil 13 anstelle des Markierungsabsatzes angebrachte rote Warnmarkierung bei richtiger Zusammensetzung unsichtbar werden, oder es könnte zur weiteren Verdeutlichung sogar ein in einem Fenster erscheinendes grünes Anzeigefeld vorgesehen sein.

### Bezugsziffernliste:

- 1: Wechselkopf
- 2: Arretierring
- 3: Sicherungsmittelhalteteil
- 4: Presswerkzeug
- 5: Kugelführung
- 6: Kugelführung
- 7: Aufnahmenut
- 8: Aufnahmenut
- 9: Feder
- 10: Presskolben
- 11: (nicht verwendet)
- 12: Schubstange
- 13: Schaftteil
- 14: Haltenut
- 15: Haltenut
- 16: Markierungsabsatz

- S1: Sicherungsmittel
- S2: Sicherungsmittel
- P: Presskraft

## Patentansprüche

1. Schnellkupplungssystem mit einem Presswerkzeug (4) und einem Wechselkopf (1), das der Befestigung eines Wechselkopfes (1) an dem Presswerkzeug (4) dient, wobei das Presswerkzeug (4) einen in einer Axialrichtung beweglichen Presskolben (10) zur Betätigung einer Presseinrichtung im Wechselkopf (1) aufweist und wobei eine Sicherungsmittelanordnung vorhanden ist, wobei das Schnellkupplungssystem gewindefrei ist, und dass die Sicherungsmittelanordnung radial verschiebliche Sicherungsmittel (S1, S2) aufweist, wobei die Sicherungsmittel (S1, S2) zur Erhöhung der Sicherungswirkung mindestens doppelt vorhanden und axial hintereinander angeordnet sind, und dass die Sicherungsmittelanordnung in einer nicht-betriebssicheren Stellung eine mechanisch feste Kupplung zwischen dem Presswerkzeug (4) und dem Wechselkopf (1) verunmöglicht,
wobei das Presswerkzeug (4) einen auf einem Sicherungsmittelhalteteil (3) axial verschieblichen Arretierring (2), der von einer Feder (9) vom Presswerkzeug weg gedrückt wird, umfasst,
**dadurch gekennzeichnet, dass** ein Schaftteil (13) des Wechselkopfs (1) einen Markierungsabsatz (16) aufweist, wobei wenn der Schaftteil (13) des Wechselkopfs (1) vollständig in das Sicherungsmittelhalteteil (3) des Wechselkopfs eingeschoben ist und darin arretiert, der Markierungsabsatz (16) sich innerhalb des Arretierrings (2) befindet und somit unsichtbar ist, so dass zu erkennen ist, dass das Presswerkzeug (4) betriebssicher zusammengebaut ist.

2. Schnellkupplungssystem nach Patentanspruch 1, **dadurch gekennzeichnet, dass** das Schnellkupplungssystem eine Anzeigevorrichtung umfasst, die die richtige und betriebssichere Befestigung des Wechselkopfes (1) am Presswerkzeug (4) visuell erkenntlich macht.

3. Schnellkupplungssystem nach Patentanspruch 1 oder 2, **dadurch gekennzeichnet, dass** das Schnellkupplungssystem einen Bajonettverschluss aufweist.

4. Wechselkopf eines Schnellkupplungssystems nach Patentanspruch 1, **dadurch gekennzeichnet, dass** der Wechselkopf (1) an einem in ein Sicherungsmittelhalteteil (3) des Presswerkzeuges (4) einführbaren Schaftteil (13) mindestens zwei axial hintereinander angeordnete Haltenuten (14, 15) aufweist.

5. Wechselkopf nach Patentanspruch 4, **dadurch gekennzeichnet, dass** er am Schaftteil (13) mindestens eine visuell erkennbare Markierung aufweist.

6. Wechselkopf nach Patentanspruch 5, **dadurch gekennzeichnet, dass** die visuell erkennbare Markierung ein Markierungsabsatz (16) oder eine farbige Warnmarkierung ist.

## Claims

1. A quick coupling system with a press tool (4) and an exchangeable head (1), said coupling system designed for fastening an exchangeable head (1) on the press tool (4), wherein the press tool (4) includes a press piston (10) moveable in an axial direction for actuating a press apparatus in the exchangeable head (1), wherein a securing-means arrangement is present, wherein the quick coupling system is unthreaded and the securing-means arrangement includes radially displaceable securing means (S1, S2), wherein the securing means (S1, S2) are present at least twice, thus increasing the securing effect, and are arranged axially behind one another, wherein the securing-means arrangement makes a mechanically secure coupling between the press tool (4) and the exchangeable head (1) impossible in a non-operationally-safe position, and wherein the press tool (4) comprises a locking ring (2) axially displaceable on a securing-means holding part (3), said locking ring being pushed away from the press tool by a spring (9),
**characterised in that**
a shank part (13) of the exchangeable head (1) includes a marking shoulder (16), wherein,
when the shank part (13) of the exchangeable head (1) is completely inserted into the securing-means holding part (3) of the exchangeable head and locks within the same, the marking shoulder (16) is located inside the locking ring (2) and therefore is invisible, such that it is recognisable that the press tool (4) has been assembled in an operationally safe manner.

2. The quick coupling system according to claim 1, **characterised in that** the quick coupling system comprises an indication device which makes the correct and operationally safe fastening of the exchangeable head (1) on the press tool (4) visually recognisable.

3. The quick coupling system according to claim 1 or 2, **characterised in that** the quick coupling system includes a bayonet closure.

4. An exchangeable head of a quick coupling system according to claim 1, **characterised in that** the exchangeable head (1) includes at least two retaining grooves (14, 15) arranged axially one behind the other on a shank part (13) which can be inserted into a securing-means holding part (3) of the press tool (4).

5. The exchangeable head according to claim 4, **characterised in that** it includes at least one visually recognisable marking on the shank part (13) .

6. The exchangeable head according to claim 5, **characterised in that** the visually recognisable marking is a marking shoulder (16) or a coloured warning marking.

## Revendications

1. Système d'accouplement rapide, pourvu d'un outil de pressage (4) et d'une tête interchangeable (1) servant à fixer une tête interchangeable (1) sur l'outil de pressage (4), l'outil de pressage (4) comportant un piston de pressage (10) mobile dans une direction axiale, destiné à manoeuvrer un système de pressage dans la tête interchangeable (1) et un agencement de moyens de fixation étant présent, le système d'accouplement rapide étant exempt de filetage et l'agencement de moyens de fixation comportant des moyens de fixation (S1, S2) déplaçables en direction radiale, pour augmenter l'effet de fixation, les moyens de fixation (S1, S2) étant présents au moins en double exemplaire et étant placés les uns derrière les autres en direction axiale et dans une position non sécurisée, l'agencement de moyens de fixation empêchant un accouplement mécaniquement solide entre l'outil de pressage (4) et la tête interchangeable (1), l'outil de pressage (4) comprenant une bague de blocage (2) déplaçable en direction axiale sur une pièce de retenue (3) de moyen de fixation qui est poussée en éloignement de l'outil de pressage par un ressort (9),
**caractérisé en ce que**
une pièce en tige (13) de la tête interchangeable (1) comporte un talon de marquage (16),
lorsque la pièce en tige (13) de la tête interchangeable (1) est entièrement introduite dans la pièce de retenue (3) de moyen de fixation de la tête interchangeable et bloquée dans celle-ci, le talon de marquage (16) se trouvant à l'intérieur de la bague de blocage (2) et étant ainsi invisible, de sorte qu'on peut identifier que l'outil de pressage (4) est assemblé de manière sécurisée.

2. Système d'accouplement rapide selon la revendication 1, **caractérisé en ce que** le système d'accouplement rapide comprend un dispositif d'affichage qui rend visuellement identifiable la fixation correcte et sécurisée de la tête interchangeable (1) sur l'outil de pressage (4).

3. Système d'accouplement rapide selon la revendication 1 ou 2, **caractérisé en ce que** le système d'accouplement rapide comporte une fermeture à baïonnette.

4. Tête interchangeable d'un système d'accouplement rapide selon la revendication 1, **caractérisée en ce que** dans une pièce en tige (13) insérable dans une pièce de retenue (3) de moyen de fixation de l'outil de pressage (4), la tête interchangeable (1) comporte au moins deux rainures de retenue (14, 15) placées l'une derrière l'autre en direction axiale.

5. Tête interchangeable selon la revendication 4, **caractérisée en ce qu'**elle comporte sur la pièce en tige (13) au moins un marquage visuellement identifiable.

6. Tête interchangeable selon la revendication 5, **caractérisée en ce que** le marquage visuellement identifiable est un talon de marquage (16) ou un marquage de signalisation en couleur.
